(19) Europäisches Patentamt
European Patent Office
Office européen des brevets

(11) **EP 4 060 547 A1**

(12) **EUROPEAN PATENT APPLICATION**

(43) Date of publication:
**21.09.2022 Bulletin 2022/38**

(21) Application number: **22159583.8**

(22) Date of filing: **02.03.2022**

(51) International Patent Classification (IPC):
**G06F 30/23** (2020.01)   **B32B 37/00** (2006.01)
**B64C 3/20** (2006.01)   **B64F 5/10** (2017.01)
**G06F 111/06** (2020.01)   **G06F 113/26** (2020.01)
**G06F 113/28** (2020.01)   **G06F 119/14** (2020.01)

(52) Cooperative Patent Classification (CPC):
**G06F 30/23; B32B 37/00; B64C 3/20; B64F 5/10;**
G06F 2111/06; G06F 2113/26; G06F 2113/28;
G06F 2119/14

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.03.2021   JP 2021042995
11.10.2021   JP 2021166663**

(71) Applicant: **Subaru Corporation
Tokyo 150-8554 (JP)**

(72) Inventor: **AOKI, Kazuyuki
Tokyo, 150-8554 (JP)**

(74) Representative: **Vossius & Partner
Patentanwälte Rechtsanwälte mbB
Siebertstraße 3
81675 München (DE)**

(54) **COMPOSITE LAMINATE DESIGNING METHOD AND AIRCRAFT**

(57)   A composite laminate designing method includes: deriving, on a basis of allowable strains corresponding to fiber orientation angles in a composite laminate having the fiber orientation angles, an allowable load region that represents in three dimensions a combination of an allowable X-direction load in a predetermined x direction in a plane orthogonal to a lamination direction in which layers of the composite laminate are laminated, an allowable Y-direction load in a y direction orthogonal to the x direction in the plane orthogonal to the lamination direction, and an allowable shearing load in a shearing direction in the plane orthogonal to the lamination direction; and determining whether a working load acting on the composite laminate is included within the allowable load region.

FIG. 7

**Description**

BACKGROUND

1. Technical Field

The disclosure relates to a composite laminate designing method and an aircraft.

2. Related Art

Japanese Unexamined Patent Application Publication No. 2008-108242 discloses a technique for evaluating the strength of a glued joint structure in which a composite laminate is used.

SUMMARY

An aspect of the disclosure provides a composite laminate designing method. The composite laminate designing method includes deriving, on a basis of allowable strains corresponding to fiber orientation angles in a composite laminate having the fiber orientation angles, an allowable load region that represents in three dimensions a combination of an allowable X-direction load in a predetermined x direction in a plane orthogonal to a lamination direction in which layers of the composite laminate are laminated, an allowable Y-direction load in a y direction orthogonal to the x direction in the plane orthogonal to the lamination direction, and an allowable shearing load in a shearing direction in the plane orthogonal to the lamination direction. The composite laminate designing method includes determining whether a working load acting on the composite laminate is included within the allowable load region.

An aspect of the disclosure provides an aircraft including the composite laminate designed with the above-mentioned composite laminate designing method.

BRIEF DESCRIPTION OF THE DRAWINGS

The accompanying drawings are included to provide a further understanding of the disclosure and are incorporated in and constitute a part of this specification. The drawings illustrate an example embodiment and, together with the specification, serve to explain the principles of the disclosure.

FIG. 1 is a block diagram of a designing apparatus for a composite laminate of an embodiment of the disclosure;
FIG. 2 is a schematic diagram of an allowable load region in which loads can be applied to a composite laminate;
FIG. 3 is a schematic diagram of the allowable load region that changes in accordance with orientation ratios of the composite laminate;
FIG. 4 is a schematic diagram of the allowable load region that changes in accordance with the structure of the composite laminate;
FIG. 5 is a first schematic diagram of the allowable load region that changes in accordance with the magnifications of basic laminated structures of the composite laminate;
FIG. 6 is a second schematic diagram of the allowable load region that changes in accordance with the magnifications of the basic laminated structures of the composite laminate; and
FIG. 7 is a flowchart illustrating a composite laminate designing method of the embodiment.

DETAILED DESCRIPTION

Recently, in aircrafts, a composite laminate in which composite materials each containing reinforced fibers and resin are laminated has been used. To the composite laminate, various loads corresponding to parts of the aircraft are applied. The composite laminate is to have a laminated structure that can bear a load in each part of the aircraft. For example, for the laminated structure of the composite laminate, a combination of a thickness, orientation ratios, orientation directions, and so on is to be optimized for each part of the aircraft. With the related art, it may take time to optimize the laminated structure of the composite laminate and it may be difficult to increase the designing efficiency for the composite laminate.

Accordingly, it is desirable to provide a composite laminate designing method with which the designing efficiency for a composite laminate can be increased and to provide an aircraft that includes a composite laminate designed with the designing method.

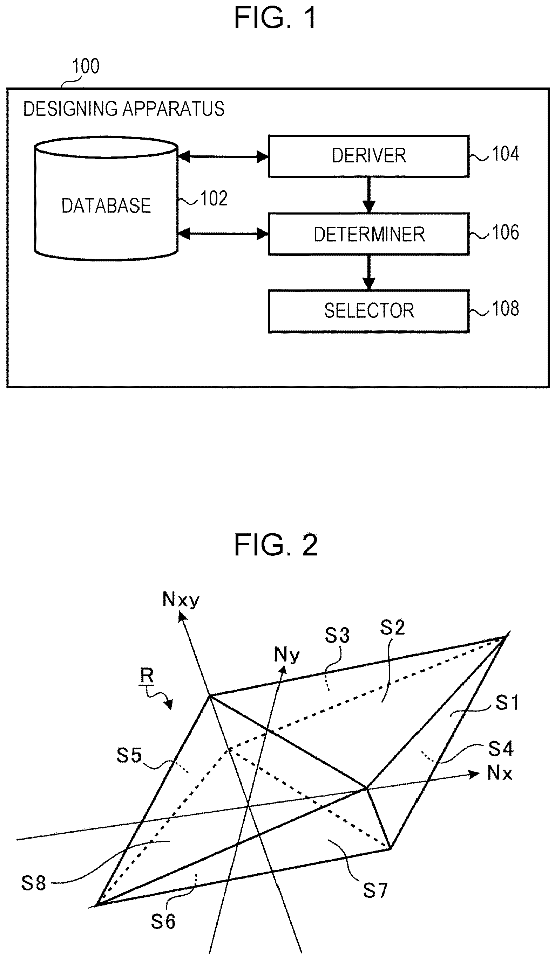

In the following, an embodiment of the disclosure is described in detail with reference to the accompanying drawings. Note that the following description is directed to an illustrative example of the disclosure and not to be construed as limiting to the disclosure. Factors including, without limitation, numerical values, shapes, materials, components, positions of the components, and how the components are coupled to each other are illustrative only and not to be construed as limiting to the disclosure. Further, elements in the following example embodiment which are not recited in a most-generic independent claim of the disclosure are optional and may be provided on an as-needed basis. The drawings are schematic and are not intended to be drawn to scale. Throughout the present specification and the drawings, elements having substantially the same function and configuration are denoted with the same numerals to avoid any redundant description. FIG. 1 is a block diagram of a designing apparatus 100 for a composite laminate of the embodiment. A composite laminate in the present embodiment has a laminated structure in which composite materials each containing reinforced fibers and resin are laminated. In the present embodiment, the composite laminate is formed of a plurality of prepreg laminates. Examples of the prepreg include a fabric material obtained by impregnating fabric formed of the warp and weft made of long fibers or continuous fibers with resin and a unidirectional (UD) material obtained by arranging reinforced fibers made of long fibers or continuous fibers so as to be oriented in one direction and impregnating the reinforced fibers with resin. In the present embodiment, an example where a UD material in which reinforced fibers made of long fibers or continuous fibers are oriented in one direction is used will be described. As the resin, a thermosetting resin or a thermoplastic resin is used. For example, the composite laminate is made of carbon fiber reinforced plastics (CFRP). However, the composite laminate is not limited to this and may be made of other fiber reinforced plastics, such as glass fiber reinforced plastics (GFRP) or aramid fiber reinforced plastics (AFRP). In the present embodiment, designing of a composite laminate that is used in aircrafts will be described. That is, a composite laminate designed with a designing method described below is used in aircrafts. In other words, the aircrafts include the composite laminate designed with the designing method described below. However, the uses of the composite laminate designed with the designing method described below are not limited to this, and the composite laminate may be used in other than aircrafts.

As illustrated in FIG. 1, the designing apparatus 100 includes a database 102, a deriver 104, a determiner 106, and a selector 108. The designing apparatus 100 is, for example, a personal computer that includes a semiconductor integrated circuit including a central processing unit (CPU), a read-only memory (ROM) in which a program and so on are stored, and a random access memory (RAM) that serves as a work area, and functions as the deriver 104, the determiner 106, and the selector 108 by executing the program.

The database 102 is implemented as, for example, a hard disk or a flash memory that includes a nonvolatile memory cell. In the database 102, for example, allowable values of strains (allowable strains) corresponding to reinforced-fiber orientation directions (fiber orientation angles) in layers that form the composite laminate are stored. The reinforced-fiber orientation directions each correspond to, for example, 0°, +45°, -45°, or 90°, where 0° is assumed to correspond to the longitudinal direction of the wings of an aircraft. An allowable value of a strain corresponding to each orientation direction is a value obtained by conducting, for example, a compression test or a tensile test on the composite laminate. In the database 102, data regarding the magnitude and direction of a working load acing on each part of the aircraft is stored.

The deriver 104 derives an allowable load that can be applied to the composite laminate. In general, a strain or the curvature of a bend that occurs when a load or a bending moment is applied to the composite laminate can be calculated by using stiffness matrices based on a lamination theory. For example, a strain or the curvature of a bend that occurs on the composite laminate can be calculated on the basis of expression 1 below.

$$\begin{bmatrix} N_x \\ N_y \\ N_{xy} \\ M_x \\ M_y \\ M_{xy} \end{bmatrix} = \begin{bmatrix} A & B \\ B & D \end{bmatrix} \begin{bmatrix} \varepsilon_x \\ \varepsilon_y \\ \varepsilon_{xy} \\ \kappa_x \\ \kappa_y \\ \kappa_{xy} \end{bmatrix}$$

expression 1

In expression 1 above, $N_x$ denotes a load applied in an x direction among in-plane directions of the composite laminate, $N_y$ denotes a load applied in a y direction among the in-plane directions of the composite laminate, and $N_{xy}$ denotes a shearing load in an in-plane direction (x, y direction) of the composite laminate. Here, the in-plane directions of the composite laminate are any directions in a plane orthogonal to a direction in which prepreg laminates of the composite laminate are laminated (hereinafter also simply referred to as a lamination direction). The x direction is a predetermined direction in the plane, and the y direction is a direction orthogonal to the x direction in the plane. $M_x$ denotes a bending moment applied in the x direction of the composite laminate, $M_y$ denotes a bending moment applied in the y direction of the composite laminate, and $M_{xy}$ denotes a torsional moment applied in the x, y direction of the composite laminate.

In expression 1 above, A, B, and D denote stiffness matrices, $\varepsilon_x$ denotes a strain occurring in the x direction of the composite laminate, $\varepsilon_y$ denotes a strain occurring in the y direction of the composite laminate, and $\varepsilon_{xy}$ denotes a strain occurring in the x, y direction (shearing direction) of the composite laminate. Further, $\kappa_x$ denotes the curvature of a bend occurring in the x direction of the composite laminate, $\kappa_y$ denotes the curvature of a bend occurring in the y direction of the composite laminate, and $\kappa_{xy}$ denotes the curvature of a bend occurring in the x, y direction of the composite laminate.

In general, a composite laminate used in each part of an aircraft is designed such that a deformation in any out-of-plane direction does not occur. For example, a composite laminate used in the main wings of an aircraft is symmetric about the lamination direction (thickness direction) such that almost no deformation in any out-of-plane direction occurs.

That is, the composite laminate of the present embodiment has a laminated structure in which prepreg laminates are laminated symmetric about the center in the thickness direction. Therefore, in the present embodiment, the composite laminate is designed without taking into consideration a deformation in any out-of-plane direction of the composite laminate. However, the composite laminate is not limited to this and may be asymmetric about the lamination direction. The composite laminate may be designed by taking into consideration deformations in both in-plane directions and out-of-plane directions of the composite laminate.

In a case where a deformation in any out-of-plane direction of the composite laminate is not taken into consideration, D, $M_x$, $M_y$, $M_{xy}$, $\kappa_x$, $\kappa_y$, $\kappa_{xy}$ in expression 1 above are not to be taken into consideration. In a case where the composite laminate is formed symmetrically, B = 0 holds. Therefore, expression 1 above can be abbreviated to expression 2 below. In expression 2, the subscript of each A denotes an index in the stiffness matrix.

$$\begin{bmatrix} N_x \\ N_y \\ N_{xy} \end{bmatrix} = \begin{bmatrix} A_{11} & A_{12} & A_{16} \\ A_{21} & A_{22} & A_{26} \\ A_{61} & A_{62} & A_{66} \end{bmatrix} \begin{bmatrix} \varepsilon_x \\ \varepsilon_y \\ \varepsilon_{xy} \end{bmatrix}$$

$$\text{expression 2}$$

Expression 3 below is obtained by transforming expression 2 above. The left-hand side of expression 2 above expresses loads applied to the composite laminate while the left-hand side of expression 3 below expresses strains to which the composite laminate is subjected. In expression 3, a denotes the inverse matrix of the stiffness matrix.

$$\begin{bmatrix} \varepsilon_x \\ \varepsilon_y \\ \varepsilon_{xy} \end{bmatrix} = [A]^{-1} \begin{bmatrix} N_x \\ N_y \\ N_{xy} \end{bmatrix} = \begin{bmatrix} a_{11} & a_{12} & a_{16} \\ a_{21} & a_{22} & a_{26} \\ a_{61} & a_{62} & a_{66} \end{bmatrix} \begin{bmatrix} N_x \\ N_y \\ N_{xy} \end{bmatrix} = [a] \begin{bmatrix} N_x \\ N_y \\ N_{xy} \end{bmatrix}$$

$$\text{expression 3}$$

The composite laminate of the present embodiment includes a plurality of layers in which the reinforced-fiber orientation directions are different. That is, the composite laminate in which the above-described UD materials are laminated includes a plurality of layers in which at least the reinforced-fiber orientation directions are different. For example, the composite laminate includes a plurality of layers in each of which reinforced fibers are oriented in a direction of 0°, +45°, -45°, or 90°, where 0° is assumed to correspond to the longitudinal direction of the wings of the aircraft.

When the direction (orientation direction) in which reinforced fibers are orientated is denoted by axial, a direction orthogonal to the reinforced-fiber orientation direction is denoted by trans, and the shearing direction of the reinforced fibers is denoted by share, expression 3 above is transformed to expression 4 and expression 5 below.

$$\begin{bmatrix} \varepsilon_{axial} \\ \varepsilon_{trans} \\ \varepsilon_{share} \end{bmatrix}_{0deg} = \begin{bmatrix} \varepsilon_{axial}^{0} \\ \varepsilon_{axial}^{90} \\ \varepsilon_{axial}^{0} \end{bmatrix} = [T_0][a]\begin{bmatrix} N_x \\ N_y \\ N_{xy} \end{bmatrix} = \begin{bmatrix} C^2 & S^2 & CS \\ S^2 & C^2 & -CS \\ -2CS & 2CS & C^2-S^2 \end{bmatrix}_{0deg} \begin{bmatrix} a_{11} & a_{12} & a_{16} \\ a_{21} & a_{22} & a_{26} \\ a_{61} & a_{62} & a_{66} \end{bmatrix}\begin{bmatrix} N_x \\ N_y \\ N_{xy} \end{bmatrix}$$

$$= \begin{bmatrix} a_{11}^{0} & a_{12}^{0} & a_{16}^{0} \\ a_{21}^{0} & a_{22}^{0} & a_{26}^{0} \\ a_{31}^{0} & a_{31}^{0} & a_{66}^{0} \end{bmatrix}\begin{bmatrix} N_x \\ N_y \\ N_{xy} \end{bmatrix}$$

$$C = \cos(0) = 1$$
$$S = \sin(0) = 0$$

expression 4

$$\begin{bmatrix} \varepsilon_{axial} \\ \varepsilon_{trans} \\ \varepsilon_{share} \end{bmatrix}_{45deg} = \begin{bmatrix} \varepsilon_{axial}^{+45} \\ \varepsilon_{axial}^{-45} \\ \varepsilon_{axial}^{+45} \end{bmatrix} = [T_{45}][a]\begin{bmatrix} N_x \\ N_y \\ N_{xy} \end{bmatrix} = \begin{bmatrix} C^2 & S^2 & CS \\ S^2 & C^2 & -CS \\ -2CS & 2CS & C^2-S^2 \end{bmatrix}_{45deg} \begin{bmatrix} a_{11} & a_{12} & a_{16} \\ a_{21} & a_{22} & a_{26} \\ a_{61} & a_{62} & a_{66} \end{bmatrix}\begin{bmatrix} N_x \\ N_y \\ N_{xy} \end{bmatrix}$$

$$= \begin{bmatrix} a_{11}^{45} & a_{12}^{45} & a_{16}^{45} \\ a_{21}^{45} & a_{22}^{45} & a_{26}^{45} \\ a_{31}^{45} & a_{31}^{45} & a_{66}^{45} \end{bmatrix}\begin{bmatrix} N_x \\ N_y \\ N_{xy} \end{bmatrix}$$

$$C = \cos(45)$$
$$S = \sin(45)$$

expression 5

Expression 4 above expresses strains to which a composite layer in which the reinforced-fiber orientation direction corresponds to 0° and a composite layer in which the reinforced-fiber orientation direction corresponds to 90° are subjected. Expression 5 above expresses strains to which a composite layer in which the reinforced-fiber orientation direction corresponds to +45° and a composite layer in which the reinforced-fiber orientation direction corresponds to -45° are subjected.

In expression 4 and expression 5 above, T denotes a coordinate transform matrix, and the subscript of each T denotes a corresponding reinforced-fiber orientation direction. Note that regarding expression 4 above, an expression of strains to which a layer in which the reinforced-fiber orientation direction corresponds to 90° is subjected is identical to the expression of strains to which a layer in which the reinforced-fiber orientation direction corresponds to 0° is subjected, and therefore, is omitted. Similarly, regarding expression 5 above, an expression of strains to which a layer in which the reinforced-fiber orientation direction corresponds to -45° is subjected is identical to the expression of strains to which a layer in which the reinforced-fiber orientation direction corresponds to +45° is subjected, and therefore, is omitted.

When expression 4 and expression 5 above are expanded, relational expressions each expressing a strain to which the composite laminate is subjected and loads applied to the composite laminate as expressed by expressions 6 and expressions 7 below are obtained. In expressions 6 and expressions 7 below, each OHT denotes an allowable value of a tensile strain in a corresponding reinforced-fiber orientation direction of the composite laminate, and each OHC denotes an allowable value of a compression strain in a corresponding reinforced-fiber orientation direction of the composite laminate.

$$\varepsilon_{axial}^{0} = a_{11}^{0} \cdot N_x + a_{12}^{0} \cdot N_y + a_{16}^{0} \cdot N_{xy} \longrightarrow OHT_0 = a_{11}^{0} \cdot N_x + a_{12}^{0} \cdot N_y + a_{16}^{0} \cdot N_{xy} :S1$$

$$OHC_0 = a_{11}^{0} \cdot N_x + a_{12}^{0} \cdot N_y + a_{16}^{0} \cdot N_{xy} :S5$$

$$\varepsilon_{axial}^{90} = a_{21}^{0} \cdot N_x + a_{22}^{0} \cdot N_y + a_{26}^{0} \cdot N_{xy} \longrightarrow OHT_{90} = a_{21}^{0} \cdot N_x + a_{22}^{0} \cdot N_y + a_{26}^{0} \cdot N_{xy} :S3$$

$$OHC_{90} = a_{21}^{0} \cdot N_x + a_{22}^{0} \cdot N_y + a_{26}^{0} \cdot N_{xy} :S7$$

expressions 6

$$\varepsilon_{axial}^{+45} = a_{11}^{45} \cdot N_x + a_{12}^{45} \cdot N_y + a_{16}^{45} \cdot N_{xy} \longrightarrow OHT_{+45} = a_{11}^{45} \cdot N_x + a_{12}^{45} \cdot N_y + a_{16}^{45} \cdot N_{xy} :S2$$

$$OHC_{+45} = a_{11}^{45} \cdot N_x + a_{12}^{45} \cdot N_y + a_{16}^{45} \cdot N_{xy} :S6$$

$$\varepsilon_{axial}^{-45} = a_{21}^{45} \cdot N_x + a_{22}^{45} \cdot N_y + a_{26}^{45} \cdot N_{xy} \longrightarrow OHT_{-45} = a_{21}^{45} \cdot N_x + a_{22}^{45} \cdot N_y + a_{26}^{45} \cdot N_{xy} :S4$$

$$OHC_{-45} = a_{21}^{45} \cdot N_x + a_{22}^{45} \cdot N_y + a_{26}^{45} \cdot N_{xy} :S8$$

expressions 7

In expressions 6 and expressions 7 above, each of the expressions to the right of each arrow is an expression obtained by substituting the allowable value of the tensile strain corresponding to the reinforced-fiber orientation direction or the allowable value of the compression strain corresponding to the reinforced-fiber orientation direction into the expression to the left of the arrow. When the allowable value of the tensile strain or the allowable value of the compression strain is substituted, allowable loads ($N_x$, $N_y$, and $N_{xy}$) that can be applied to the composite laminate can be obtained. Hereinafter, the allowable load ($N_x$) in the predetermined x direction in the plane orthogonal to the lamination direction in which prepreg laminates of the composite laminate are laminated is referred to as an allowable X-direction load. The allowable load ($N_y$) in the y direction orthogonal to the x direction in the plane orthogonal to the lamination direction in which prepreg laminates of the composite laminate are laminated is referred to as an allowable Y-direction load. The allowable load ($N_{xy}$) in the shearing direction in the plane orthogonal to the lamination direction in which prepreg laminates of the composite laminate are laminated is referred to as an allowable shearing load. In other words, the allowable X-direction load refers to the allowable load ($N_x$) in the predetermined x direction in the plane orthogonal to the lamination direction in which layers of the composite laminate are laminated. The allowable Y-direction load refers to the allowable load ($N_y$) in the y direction orthogonal to the x direction in the plane orthogonal to the lamination direction in which layers of the composite laminate are laminated. The allowable shearing load is the allowable load ($N_{xy}$) in the shearing direction in the plane orthogonal to the lamination direction in which layers of the composite laminate are laminated.

FIG. 2 is a schematic diagram of an allowable load region R in which loads can be applied to the composite laminate. As illustrated in FIG. 2, the allowable load region R has eight surfaces (S1, S2, S3, S4, S5, S6, S7, and S8), and the region surrounded by the eight surfaces is the allowable load region R. In FIG. 2, the eight surfaces S1 to S8 respectively correspond to S1 to S8 indicated in expressions 6 and expressions 7 above.

The surface S1 is a surface that represents the maximum value of the allowable tensile load in the orientation direction of 0°. The surface S2 is a surface that represents the maximum value of the allowable tensile load in the orientation direction of +45°. The surface S3 is a surface that represents the maximum value of the allowable tensile load in the orientation direction of 90°. The surface S4 is a surface that represents the maximum value of the allowable tensile load in the orientation direction of - 45°. The surface S5 is a surface that represents the maximum value of the allowable compression load in the orientation direction of 0°. The surface S6 is a surface that represents the maximum value of the allowable compression load in the orientation direction of +45°. The surface S7 is a surface that represents the maximum value of the allowable compression load in the orientation direction of 90°. The surface S8 is a surface that represents the maximum value of the allowable compression load in the orientation direction of -45°.

In a case where a working load acting on the composite laminate is within the allowable load region R, it can be determined that the composite laminate can bear the working load. On the other hand, in a case where a working load acting on the composite laminate is outside the allowable load region R, it can be determined that the composite laminate might not bear the working load.

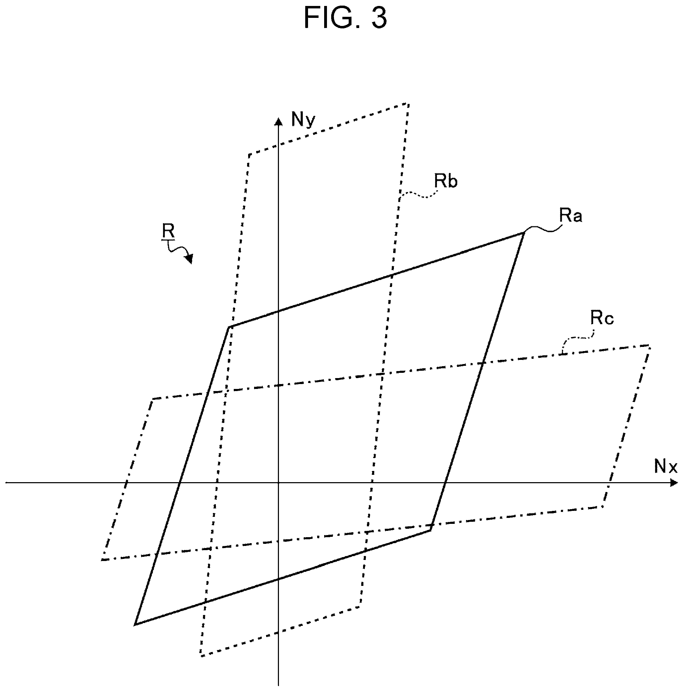

FIG. 3 is a schematic diagram of the allowable load region R that changes in accordance with orientation ratios of the composite laminate. Here, the orientation ratios are the ratios of the thicknesses of composite layers having respective fiber orientation angles to the thickness of the entire composite laminate. In FIG. 3, the allowable load region Ra is an allowable load region in a case where the orientation ratios of the composite laminate are substantially equal to each other (0° = 25%, +45° = 25%, - 45° = 25%, and 90° = 25%) (the composite laminate having such orientation ratios is hereinafter also referred to as a quasi-isotropic laminate).

The allowable load region Rb is an allowable load region in which the orientation ratio for 90° in the composite laminate is larger than the other orientation ratios (for 0°, +45°, and -45°) (the composite laminate having such orientation ratios is hereinafter also referred to as a 90° rich laminate). For example, the orientation ratios of the 90° rich laminate are as follows: 0° = 20%, +45° = 20%, -45° = 20%, and 90° = 40%. In the allowable load region Rb, the region in the Nx direction is smaller and the region in the Ny direction is larger than those in the allowable load region Ra.

The allowable load region Rc is an allowable load region in which the orientation ratio for 0° in the composite laminate is larger than the other orientation ratios (for +45°, -45°, and 90°) (the composite laminate having such orientation ratios is hereinafter also referred to as a 0° rich laminate). For example, the orientation ratios of the 0° rich laminate are as follows: 0° = 40%, +45° = 20%, -45° = 20%, and 90° = 20%. In the allowable load region Rc, the region in the Nx direction is larger and the region in the Ny direction is smaller than those in the allowable load region Ra. As described above, the allowable load region R changes in accordance with the orientation ratios of the composite laminate.

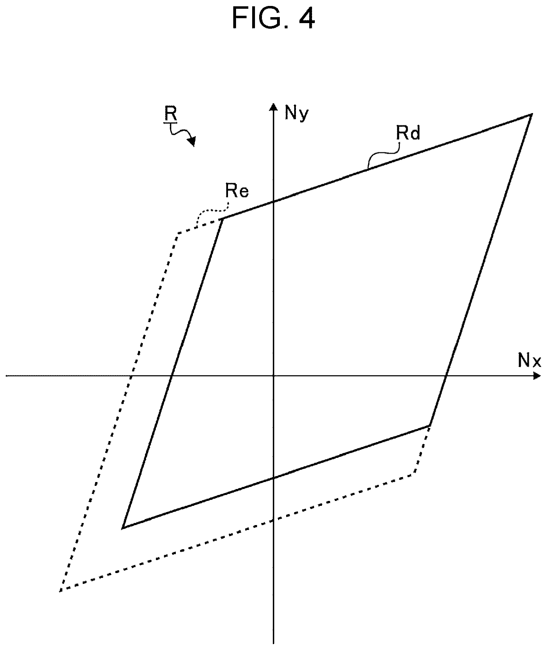

FIG. 4 is a schematic diagram of the allowable load region R that changes in accordance with the structure of the composite laminate. In FIG. 4, the allowable load region Rd is an allowable load region in a case where the composite laminate has a through hole for allowing a fastening member (for example, a fastener) to pass therethrough. The allowable load region Re is an allowable load region in a case where the composite laminate has a through hole and the through hole is filled with a fastening member (fastener). As illustrated in FIG. 4, the allowable load region Re is larger than the allowable load region Rd. This is because the through hole of the composite laminate is filled with the fastening member, and accordingly, the strength becomes higher than that in a case where the through hole is not filled with the fastening member.

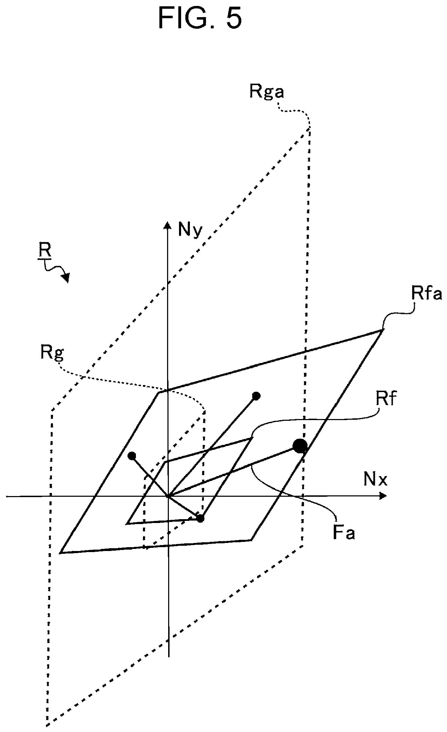

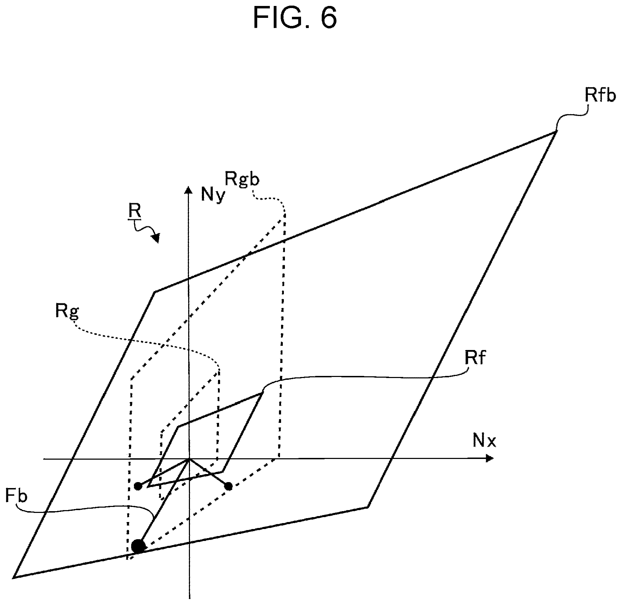

FIG. 5 is a first schematic diagram of the allowable load region R that changes in accordance with the magnifications of basic laminated structures of the composite laminate. FIG. 6 is a second schematic diagram of the allowable load region R that changes in accordance with the magnifications of the basic laminated structures of the composite laminate. Here, a basic laminated structure is a structure of the composite laminate in which the number of layers in each orientation direction is set to a minimum unit on the basis of the orientation ratios of the composite laminate. For example, the basic laminated structure is a structure of the composite laminate, and for each of the quasi-isotropic laminate, the 90° rich laminate, and the 0° rich laminate, the number of layers in each orientation direction is set to the minimum unit. For example, for the quasi-isotropic laminate, the basic laminated structure is a laminated structure including one layer (one ply) in the orientation direction of 0°, one layer (one ply) in the orientation direction of +45°, one layer (one ply) in the orientation direction of -45°, and one layer (one ply) in the orientation direction of 90°, that is, four plies in total. Note that the thickness of one ply is the same regardless of the layer in each orientation direction.

In FIG. 5 and FIG. 6, the allowable load region Rf is an allowable load region in a case where the 0° rich laminate is formed of only the basic laminated structure. Here, the basic laminated structure is a laminated structure including, for example, two layers (two plies) in the orientation direction of 0°, one layer (one ply) in the orientation direction of +45°, one layer (one ply) in the orientation direction of -45°, and one layer (one ply) in the orientation direction of 90°, that is, five plies in total.

The allowable load region Rfa illustrated in FIG. 5 is an allowable load region that is an integer multiple of the allowable load region Rf (here, the allowable load region Rf is enlarged two-fold, which is a minimum magnification) such that a working load (for example, the working load Fa) is included within the allowable load region. That is, the allowable load region Rfa is an allowable load region in a case where the magnification of the basic laminated structure (five plies) of the 0° rich laminate is set to a two-fold magnification (ten plies). The allowable load region Rfb illustrated in FIG. 6 is an allowable load region that is an integer multiple of the allowable load region Rf (here, the allowable load region Rf is enlarged four-fold, which is a minimum magnification) such that a working load (for example, the working load Fb) is included within the allowable load region. That is, the allowable load region Rfb is an allowable load region in a case where the magnification of the basic laminated structure (five plies) of the 0° rich laminate is set to a four-fold magnification (20 plies).

In FIG. 5 and FIG. 6, the allowable load region Rg is an allowable load region in a case where the 90° rich laminate is formed of only the basic laminated structure. Here, the basic laminated structure is a laminated structure including, for example, one layer (one ply) in the orientation direction of 0°, one layer (one ply) in the orientation direction of +45°, one layer (one ply) in the orientation direction of -45°, and two layers (two plies) in the orientation direction of 90°, that is, five plies in total.

The allowable load region Rga illustrated in FIG. 5 is an allowable load region that is an integer multiple of the allowable load region Rg (here, the allowable load region Rg is enlarged four-fold, which is a minimum magnification) such that a working load (for example, the working load Fa) is included within the allowable load region. That is, the allowable load region Rga is an allowable load region in a case where the magnification of the basic laminated structure (five plies) of the 90° rich laminate is set to a four-fold magnification (20 plies). The allowable load region Rgb illustrated in FIG. 6 is an allowable load region that is an integer multiple of the allowable load region Rg (here, the allowable load region Rg is enlarged two-fold, which is a minimum magnification) such that a working load (for example, the working load Fb) is included within the allowable load region. That is, the allowable load region Rgb is an allowable load region in a case where the magnification of the basic laminated structure (five plies) of the 90° rich laminate is set to a two-fold magnification (ten plies). As described above, the allowable load region R changes in accordance with the magnification of the basic laminated structure of the composite laminate while keeping the similar figure.

As illustrated in FIG. 5, neither the allowable load region Rf nor the allowable load region Rg is able to include a working load (for example, the working load Fa) acting on the composite laminate. On the other hand, both the allowable load region Rfa and the allowable load region Rga are able to include a working load (for example, the working load Fa) acting on the composite laminate.

Here, the laminated structure (ten plies) having the allowable load region Rfa is smaller than the laminated structure (20 plies) having the allowable load region Rga. That is, the thickness of the laminated structure having the allowable load region Rfa is less than the thickness of the laminated structure having the allowable load region Rga. Therefore, with the allowable load region Rfa, the laminated structure can be made thinner than with the allowable load region Rga while a working load acting on the composite laminate can be included within the region.

Similarly, as illustrated in FIG. 6, neither the allowable load region Rf nor the allowable load region Rg is able to include a working load (for example, the working load Fb) acting on the composite laminate. On the other hand, both the allowable load region Rfb and the allowable load region Rgb are able to include a working load (for example, the working load Fb) acting on the composite laminate.

Here, the laminated structure (ten plies) having the allowable load region Rgb is smaller than the laminated structure (20 plies) having the allowable load region Rfb. That is, the thickness of the laminated structure having the allowable load region Rgb is less than the thickness of the laminated structure having the allowable load region Rfb. Therefore, with the allowable load region Rgb, the laminated structure can be made thinner than with the allowable load region Rfb while a working load acting on the composite laminate can be included within the region.

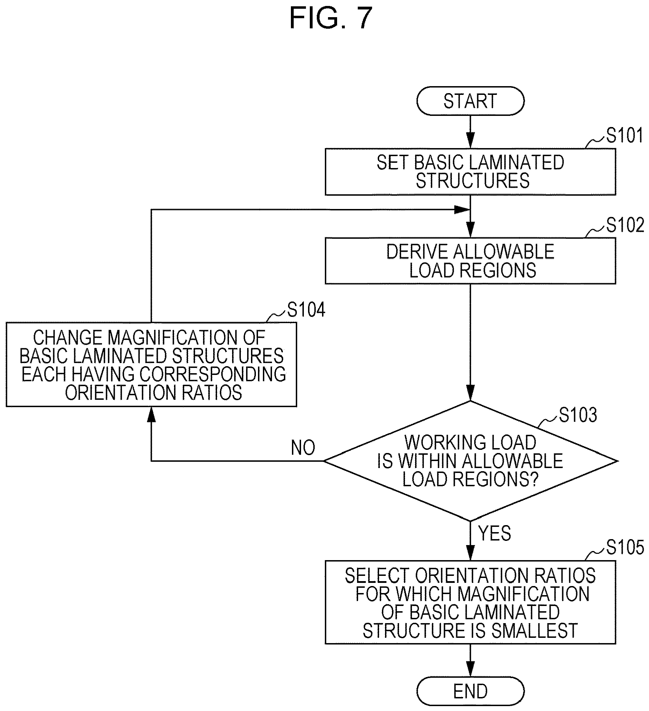

Now, a composite laminate designing method of the present embodiment will be described below. FIG. 7 is a flowchart illustrating the composite laminate designing method of the present embodiment. First, the deriver 104 sets a basic laminated structure for each of the quasi-isotropic laminate, the 90° rich laminate, and the 0° rich laminate (step S101). The deriver 104 obtains from the database 102 allowable values of strains corresponding to the reinforced-fiber orientation directions of the composite laminate.

The deriver 104 derives S1 to S8 that correspond to the eight surfaces on the basis of expressions 6 and 7 above and derives from S1 to S8 a plurality of allowable load regions R so as to correspond to the reinforced-fiber orientation directions. That is, on the basis of the allowable values of strains corresponding to the reinforced-fiber orientation directions, the deriver 104 derives the allowable load regions R each representing in three dimensions a combination of the allowable X-direction load, the allowable Y-direction load, and the allowable shearing load in in-plane directions of the composite laminate (step S102).

In the present embodiment, the deriver 104 derives the allowable load regions R for the 0° rich laminate, the quasi-isotropic laminate, and the 90° rich laminate that are respectively formed of their basic laminated structures. That is, the deriver 104 derives the allowable load regions R of the basic laminated structures, of the composite laminate, each having a corresponding set of orientation ratios.

Next, the determiner 106 obtains from the database 102 data regarding the magnitude and direction of a working load acting on each part of the aircraft. The determiner 106 determines on the basis of the obtained data whether the working load is included within the allowable load regions R derived in step S102 (step S103).

If the working load is outside all of the allowable load regions R each corresponding to a corresponding set of orientation ratios, the deriver 104 increases the magnification of the basic laminated structures each having a corresponding set of orientation ratios (for example, from one-fold to two-fold) (step S104). The deriver 104 derives again the allowable load regions R of the respective basic laminated structures that each have a corresponding set of orientation ratios and for which the magnification has been changed (step S102).

The determiner 106 determines whether the working load is included within the allowable load regions R derived again (step S103). As described above, if the working load is not included within any of the allowable load regions R of the respective basic laminated structures each having a corresponding set of orientation ratios, the magnification of the basic laminated structures may be repeatedly multiplied by an integer and increased to a magnification with which the working load is included within the allowable load regions R. However, the magnification of the basic laminated structures is not limited to an integer and may be a decimal or a fraction. The deriver 104 may derive the magnifications of the respective basic laminated structures each having a corresponding set of orientation ratios, with which the working load is included within the allowable load regions R, and derive the allowable load regions R, corresponding to the respective magnifications, of the respective basic laminated structures each having a corresponding set of orientation ratios.

On the other hand, if the working load is included within any of the allowable load regions R each corresponding to a corresponding set of orientation ratios, the selector 108 selects a set of orientation ratios for which the magnification of the basic laminated structure is smallest (step S105). If there are a plurality of sets of orientation ratios, for each of which the magnification of the basic laminated structure is smallest, the selector 108 may select one set of orientation ratios from among the plurality of sets of orientation ratios on the basis of priority levels set in advance for the sets of orientation ratios. Accordingly, a laminated structure of the composite laminate that can bear the working load and that is lightest can be selected.

For example, in the case of FIG. 5, the orientation ratios of the 0° rich laminate are selected for which the magnification of the basic laminated structure is a two-fold magnification. In the case of FIG. 6, the orientation ratios of the 90° rich laminate are selected for which the magnification of the basic laminated structure is a two-fold magnification.

As described above, with the composite laminate designing method of the present embodiment, the allowable load region R representing in three dimensions a combination of the allowable X-direction load, the allowable Y-direction load, and the allowable shearing load in in-plane directions of the composite laminate is derived. It is determined whether a working load is included within the derived allowable load region R. Therefore, it can be quickly evaluated whether strength is maintained for the in-plane loads ($N_x$, $N_y$, and $N_{xy}$) applied to the composite laminate in a large number of cases of loads. Accordingly, the thickness, the orientation ratios, the orientation directions, and so on of the composite laminate can be efficiently optimized, and the designing efficiency for the composite laminate can be increased.

Although an embodiment of the disclosure has been described above with reference to the attached drawings, the disclosure is not limited to the embodiment as a matter of course. It is obvious that the person skilled in the art can conceive of various modifications or corrections within the scope described in the claims, and it is understood that such modifications or corrections are also within the technical scope of the disclosure as a matter of course.

In the above-described embodiment, although a case has been described where the orientation ratios of the composite laminate are those of the 0° rich laminate, those of the quasi-isotropic laminate, or those of the 90° rich laminate, the orientation ratios are not limited to the above. The orientation ratios of the composite laminate may be, for example, those of a +45° rich laminate or those of a -45° rich laminate. The basic laminated structure of the +45° rich laminate is a laminated structure including, for example, one layer (one ply) in the orientation direction of 0°, two layers (two plies) in the orientation direction of +45°, one layer (one ply) in the orientation direction of - 45°, and one layer (one ply) in the orientation direction of 90°, that is, five plies in total. The basic laminated structure of the -45° rich laminate is a laminated structure including, for example, one layer (one ply) in the orientation direction of 0°, one layer (one ply) in the orientation direction of +45°, two layers (two plies) in the orientation direction of -45°, and one layer (one ply) in the orientation direction of 90°, that is, five plies in total. Note that the basic laminated structure of the quasi-isotropic laminate is a laminated structure including, for example, one layer (one ply) in the orientation direction of 0°, one layer (one ply) in the orientation direction of +45°, one layer (one ply) in the orientation direction of -45°, and one layer (one ply) in the orientation direction of 90°, that is, four plies in total.

In the above-described embodiment, although an example where the designing apparatus 100 includes the selector 108 has been described, the selector 108 may be optional and, for example, the designing apparatus 100 might not include the selector 108.

**Claims**

1. A composite laminate designing method comprising:

    deriving, on a basis of allowable strains corresponding to fiber orientation angles in a composite laminate having the fiber orientation angles, an allowable load region that represents in three dimensions a combination of an allowable X-direction load in a predetermined x direction in a plane orthogonal to a lamination direction in which layers of the composite laminate are laminated, an allowable Y-direction load in a y direction orthogonal to the x direction in the plane orthogonal to the lamination direction, and an allowable shearing load in a shearing direction in the plane orthogonal to the lamination direction; and
    determining whether a working load acting on the composite laminate is included within the allowable load region.

2. The composite laminate designing method according to Claim 1, wherein

    the allowable load region changes in accordance with a magnification of a basic laminated structure in which a number of layers for each fiber orientation angle among the fiber orientation angles is set to a minimum unit on a basis of an orientation ratio that is a ratio of a thickness of a composite layer having the fiber orientation angle to a thickness of the composite laminate and in accordance with the orientation ratio, and
    the composite laminate designing method further comprises determining the orientation ratio with which the working load is included within the allowable load region and for which the magnification of the basic laminated structure is smallest.

3. An aircraft comprising the composite laminate designed with the designing method according to Claim 1 or 2.

# FIG. 1

# FIG. 2

# FIG. 3

# FIG. 4

# FIG. 5

# FIG. 6

# FIG. 7

START

↓

SET BASIC LAMINATED
STRUCTURES ⌒S101

↓

DERIVE ALLOWABLE
LOAD REGIONS ⌒S102

↓

CHANGE MAGNIFICATION OF
BASIC LAMINATED STRUCTURES
EACH HAVING CORRESPONDING
ORIENTATION RATIOS ⌒S104

⌒S103
WORKING LOAD
IS WITHIN ALLOWABLE
LOAD REGIONS?

NO

YES

↓

SELECT ORIENTATION RATIOS
FOR WHICH MAGNIFICATION
OF BASIC LAMINATED
STRUCTURE IS SMALLEST ⌒S105

↓

END

Europäisches
Patentamt

European
Patent Office

Office européen
des brevets

# EUROPEAN SEARCH REPORT

**Application Number**

EP 22 15 9583

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PAPILA MELIH: "Design of and with thin-ply non-crimp fabric as building blocks for composites", SCIENCE AND ENGINEERING OF COMPOSITE MATERIALS, vol. 25, no. 3, 25 April 2018 (2018-04-25), pages 501-516, XP055951009, IS ISSN: 0792-1233, DOI: 10.1515/secm-2015-0386 | 1,2 | INV. G06F30/23 B32B37/00 B64C3/20 B64F5/10 ADD. G06F111/06 G06F113/26 G06F113/28 G06F119/14 |
| Y | * abstract; figures 4,7,9 * * table nomenclature * * table 1 * * page 506 * * page 507, right-hand column, line 2f * * the whole document * ----- | 2 | |
| X | Tsai Stephen W W ET AL: "Composites simulation View project Delaminations and experimental tests View project", , 1 October 2020 (2020-10-01), XP055951008, Retrieved from the Internet: URL:https://www.researchgate.net/profile/W ill-Guin-2/publication/356217171_Weight_an d_cost_reduction_with_double-double_lamina tes/links/6192746f07be5f31b784612a/Weight- and-cost-reduction-with-double-double-lami nates.pdf [retrieved on 2022-08-11] | 1 | |
| Y | * abstract; figure 3 * * page 65, left-hand column, paragraph 25f * * the whole document * ----- -/-- | 2 | |

**TECHNICAL FIELDS SEARCHED (IPC)**

G06F
B64C
B64F
B32B

The present search report has been drawn up for all claims

| Place of search | Date of completion of the search | Examiner |
|---|---|---|
| Munich | 11 August 2022 | Dapp, Wolfgang |

EPO FORM 1503 03.82 (P04C01)

page 1 of 2

Europäisches
Patentamt

European
Patent Office

Office européen
des brevets

**EUROPEAN SEARCH REPORT**

Application Number

**EP 22 15 9583**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TSAI STEPHEN W ET AL: "A unit circle failure criterion for carbon fiber reinforced polymer composites", COMPOSITES SCIENCE AND TECHNOLOGY, ELSEVIER, AMSTERDAM, NL, vol. 123, 19 December 2015 (2015-12-19), pages 71-78, XP029395288, ISSN: 0266-3538, DOI: 10.1016/J.COMPSCITECH.2015.12.011 | 3 | |
| A | * abstract; figures 2,3,5 * <br> * the whole document * <br> ----- | 1,2 | |
| A | EP 1 050 396 A1 (MC DONNELL DOUGLAS CORP [US]) 8 November 2000 (2000-11-08) * paragraphs [0002], [0030], [0054], [0071] - [0075], [0091] * * the whole document * <br> ----- | 1,2 | |

**TECHNICAL FIELDS SEARCHED (IPC)**

The present search report has been drawn up for all claims

| Place of search | Date of completion of the search | Examiner |
|---|---|---|
| Munich | 11 August 2022 | Dapp, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 9583

This annex lists the patent family members relating to the patent documents cited in the above-mentioned European search report.
The members are as contained in the European Patent Office EDP file on
The European Patent Office is in no way liable for these particulars which are merely given for the purpose of information.

11-08-2022

| Patent document cited in search report | | Publication date | Patent family member(s) | | Publication date |
|---|---|---|---|---|---|
| EP 1050396 | A1 | 08-11-2000 | DE | 69910174 T2 | 17-06-2004 |
| | | | EP | 1050396 A1 | 08-11-2000 |

EPO FORM P0459

For more details about this annex : see Official Journal of the European Patent Office, No. 12/82

**REFERENCES CITED IN THE DESCRIPTION**

**Patent documents cited in the description**

- JP 2008108242 A